(19) Europäisches Patentamt

European Patent Office

Office européen des brevets

(11) **EP 1 576 429 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **03775081.7**

(22) Anmeldetag: **24.10.2003**

(51) Int Cl.:
**G05B 17/02** $^{(2006.01)}$

(86) Internationale Anmeldenummer:
**PCT/DE2003/003542**

(87) Internationale Veröffentlichungsnummer:
**WO 2004/042480 (21.05.2004 Gazette 2004/21)**

(54) **MODELLIERVERFAHREN FÜR EIN METALL**

MODELING METHOD FOR A METAL

PROCEDE DE MODELISATION POUR METAL

(84) Benannte Vertragsstaaten:
**AT BE BG CH CY CZ DE DK EE ES FI FR GB GR HU IE IT LI LU MC NL PT RO SE SI SK TR**

(30) Priorität: **06.11.2002 DE 10251716**

(43) Veröffentlichungstag der Anmeldung:
**21.09.2005 Patentblatt 2005/38**

(73) Patentinhaber: **SIEMENS AKTIENGESELLSCHAFT**
**80333 München (DE)**

(72) Erfinder:
• **WEINZIERL, Klaus**
**90480 Nürnberg (DE)**
• **FRANZ, Klaus**
**90455 Nürnberg (DE)**

(56) Entgegenhaltungen:
**DE-A- 19 740 691**    **DE-A- 19 963 185**

**Beschreibung**

Die vorliegende Erfindung betrifft ein Modellierverfahren für ein Metall, dessen Temperatur direkt oder indirekt durch mindestens ein Stellglied beeinflussbar ist,

- wobei einem Materialmodell eine Anfangstemperatur des Metalls und Anfangsanteile, in denen das Metall zumindest in einer ersten bzw. einer zweiten Phase vorliegt, vorgegeben werden,
- wobei innerhalb des Materialmodells unter Berücksichtigung der Anfangstemperatur, der Anfangsanteile und einer Stellgröße für das Stellglied in Echtzeit eine Wärmeleitungsgleichung und eine Umwandlungsgleichung gelöst und so eine erwartete Temperatur des Metalls sowie erwartete Anteile ermittelt werden, in denen das Metall zumindest in der ersten bzw. der zweiten Phase vorliegt,
- wobei das Stellglied gemäß der Stellgröße angesteuert wird.

Derartige Verfahren sind z. B. aus dem Aufsatz "Numerische Simulation der Wärmeleitung in Stahlblechen - Mathematik hilft bei der Steuerung von Kühlstrecken" von W. Borchers et al., veröffentlicht im Unikurier der Friedrich-Alexander-Universität Erlangen-Nürnberg, Heft 102, Oktober 2001, 27. Jahrgang, bekannt.

Die bekannten Verfahren werden insbesondere zur Steuerung von Kühlmittelstellgliedern in Walzwerken eingesetzt. Die Kühlmittelstellglieder können dabei zwischen den Walzgerüsten angeordnet sein. Sie können auch den Walzgerüsten nachgeordnet sein. Es sind aber auch andere Anwendungsfälle denkbar, z. B. im Rahmen der Berechnung von Erstarrungsprozessen beim Stranggießen oder bei der Steuerung von Walzwerken als solchen.

Zum Ermitteln der Anteile der Phasen werden im Stand der Technik die Scheilsche Regel oder die Ansätze von Johnson-Mehl-Avrami bzw. Brimacombe herangezogen.

Die Ansätze des Standes der Technik arbeiten in der Praxis nicht in allen Fällen fehlerfrei. Insbesondere weisen sie eine Reihe von systematischen Nachteilen auf. Zum einen muss jedes Material separat parametriert werden. Interpolationen zwischen verschiedenen Materialien sind nicht oder zumindest nur eingeschränkt möglich. Zum zweiten werden bei den Verfahren des Standes der Technik nur zwei Phasen betrachtet. Eine Erweiterung auf mehr als zwei Phasen ist systembedingt nicht möglich. Zum dritten liefern die Verfahren des Standes der Technik nur bei einer vollständigen Umwandlung des betrachteten Metalls eine gute Übereinstimmung zwischen Modell und Realität. Zum Vierten liefert das Verfahren des Standes der Technik keine Information über die bei der Phasenumwandlung freigesetzte Umwandlungswärme. Die Kenntnis der Umwandlungswärme ist für ein korrektes Lösen der Wärmeleitungsgleichung aber unabdingbar.

Die Aufgabe der vorliegenden Erfindung besteht darin, ein Modellierverfahren für ein Metall zu schaffen, das bessere Modellergebnisse liefert.

Die Aufgabe wird dadurch gelöst, dass im Rahmen der Umwandlungsgleichung die Gibbsschen freien Enthalpien der Phasen des Metalls, anhand der Gibbsschen freien Enthalpien eine Umwandlungsrate des Metalls von der ersten Phase in die zweite Phase und anhand der Umwandlungsrate die erwarteten Anteile ermittelt werden.

Im einfachsten Fall wird bei der vorliegenden Erfindung - ebenso wie beim Stand der Technik - ein reines Zweiphasensystem betrachtet, z. B. eine Umwandlung von Austenit in Ferrit und umgekehrt. Es ist aber ohne weiteres auch auf Mehrphasensysteme erweiterbar, insbesondere auf das System Ferrit-Austenit-Zementit.

In der Regel können die Anteile der Zusatzstoffe nicht unabhängig voneinander betrachtet werden. Der - auch gekoppelte - Einfluss von Zusatzstoffen auf die Gibbssche freie Enthalpie ist aber bekannt. Beispielhaft wird auf die Fachaufsätze "Approximate Thermodynamic Solution Phase Data for Steels" von Jyrki Miettinen, Calphad, Vol. 22, No. 2, Seiten 275 bis 300, 1998, und "A Regular Solution Model for Phases with Several Components and Sublattices, Suitable for Computer Applications" von Bo Sundman und John Agren, Journal Phys. Chem. Solids, Vol. 42, Seiten 297 bis 301, verwiesen. Für Stahl ist es somit möglich, die Gibbssche freie Enthalpie eines Eisen-Kohlenstoff-Gemisches als Funktion des Kohlenstoffanteils und der Temperatur zu ermitteln und die Wirkungen der Zusatzstoffe, z. B. Ni, Si, P, als Funktion des Eisen-Kohlenstoff-Gemisches sowie der Temperatur zu berücksichtigen. Bei Auslegung des Materialmodells derart, dass ihm auch die Anteile der Zusatzstoffe mit vorgegeben werden, sind die Gibbsschen freien Enthalpien der betrachteten Phasen somit auch für nicht explizit vorgegebene Materialien ermittelbar.

Wenn spezifische, d. h. auf eine einheitlichn Menge des Metalls bezogene, Gibbssche freie Enthalpien der Phasen ermittelt werden, kann die Umwandlungsrate auf besonders einfache Weise, nämlich anhand der Differenz der spezifischen Gibbsschen freien Enthalpien, ermittelt werden.

Alternativ ist es möglich, die Umwandlungsrate anhand der Summe der mit den Anteilen der Phasen gewichteten spezifischen Gibbsschen freien Enthalpien der Phasen zu ermitteln.

Ferner ist es möglich, die Umwandlungsrate anhand des Ortsintegrals über die spezifischen Gibbsschen freien Enthalpien zu ermitteln. Diese Art der Ermittlung ist insbesondere bei einer Ortsabhängigkeit der Gibbsschen freien Enthalpien mindestens einer der Phasen von Vorteil.

Wenn das Metall mindestens zwei chemisch voneinander verschiedene Bestandteile enthält, können die Gibbsschen freien Enthalpien auch zur Ermittlung der Verteilung der Bestandteile auf chemische Zusammensetzungen herangezogen werden.

Das erfindungsgemäße Modellierverfahren ist auch dann anwendbar, wenn mindestens eine der Phasen einem flüssigen Aggregatszustand des Metalls entspricht. Es ist aber auch möglich, dass mindestens eine (vorzugsweise alle) der Phasen einem festen Aggregatszustand des Metalls entspricht bzw. entsprechen.

Es ist möglich, dass das Verfahren pro Metall nur einmal angewendet wird. Vorzugsweise aber wird es bei einer Vielzahl von örtlich unmittelbar aufeinander folgenden Stellen des Metalls angewendet.

Wenn dem Materialmodell mindestens eine Solltemperatur vorgegeben wird, ist es möglich, dass das Materialmodell die Stellgröße selbsttätig ermittelt. Die Solltemperatur kann dabei insbesondere ein (zeitlicher) Solltemperaturverlauf sein.

Die Stellgröße kann ein zeitlicher Stellgrößenverlauf sein. In diesem Fall ist es insbesondere möglich, dass unter Heranziehung des Stellgrößenverlaufs die Wärmeleitungs- und die Umwandlungsgleichung schrittweise gelöst werden und so ein erwarteter Temperaturverlauf des Metalls sowie erwartete Anteilsverläufe der Phasen ermittelt werden. Das Ansteuern des Stellgliedes erfolgt in diesem Fall vorzugsweise erst nach dem vollständigen Lösen der Wärmeleitungs- und Umwandlungsgleichung.

Die Stellgröße kann aber auch ein einzelner Wert sein. In diesem Fall wird sie nur für jeweils einen Schritt herangezogen. Das Ansteuern des Stellgliedes erfolgt in diesem Fall vorzugsweise zwischen dem vorherigen und dem nachfolgenden Schritt.

Das Modellierverfahren arbeitet besonders zuverlässig, wenn die Anfangstemperatur eine vor dem Beeinflussen des Metalls durch das Stellglied von einem Messglied erfasste Isttemperatur ist.

Wenn nach dem Beeinflussen des Metalls durch das Stellglied von einem Messglied eine Endtemperatur des Metalls erfasst wird, die Endtemperatur mit der erwarteten Temperatur verglichen wird und das Materialmodell anhand des Vergleichs adaptiert wird, ist das Materialmodell als selbstlernendes Modell ausgebildet.

Vorzugsweise weist die für das Innere des Metalls 1 zu lösende Wärmeleitungsgleichung die Form

$$\frac{\partial H}{\partial t} - \mathrm{div}\left[ \frac{\lambda(H, p1, p2)}{\rho} \cdot \mathrm{grad}T(H, p1, p2) \right] = \mathrm{q'}$$

auf, wobei H die Enthalpie, t die Zeit, λ die Wärmeleitfähigkeit, p1 und p2 die Anteile der Phasen, ρ die Dichte und T die Temperatur des Metalls sind. q' ist eine Wärmemenge, die innerhalb des Metalls durch äußere Einflüsse, z. B. eine Verformung beim Walzen oder induktives Heizen, erzeugt wird. Die aufgrund von Phasenumwandlungen entstehende Umwandlungswärme ist hingegen bereits im linken Teil der Gleichung berücksichtigt.

Die oben stehende, korrekte Wärmeleitungsgleichung ist - unabhängig von der Form und dem Aggregatszustand des Metalls - stets anwendbar. Wenn das Metall als Metallband mit einer Banddickenrichtung ausgebildet ist, ist es möglich, anstelle der oben stehenden Gleichung die vereinfachte Gleichung

$$\frac{\partial H}{\partial t} - \frac{\partial}{\partial x}\left[ \frac{\lambda(H, p1, p2)}{\rho} \cdot \frac{\partial T(H, p1, p2)}{\partial x} \right] = \mathrm{q'}$$

zu lösen, wobei x der Ort in Banddickenrichtung ist.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung

FIG 1          eine Anlage zur Temperaturbeeinflussung eines Metalls,
FIG 2 und 3    Materialmodelle,
FIG 4          ein Blockschaltbild zum Lösen einer Umwandlungsgleichung,
FIG 5 und 6    beispielhafte Verläufe von Gibbsschen freien Enthalpien und
FIG 7 bis 9    weitere Anlagen zur Temperaturbeeinflussung eines Metalls.

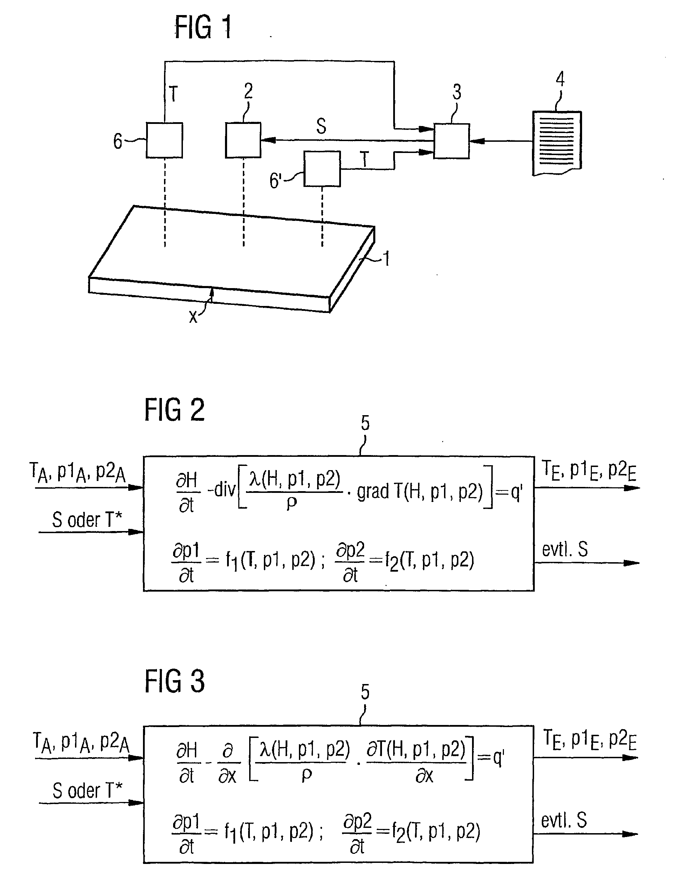

Gemäß FIG 1 weist eine Anlage zur Temperaturbeeinflussung eines Metalls 1 ein Stellglied 2 auf. Mittels des Stellglieds 2 ist - in der Regel durch Kühlen, in einzelnen Fällen aber auch durch Beheizen - direkt oder indirekt die Temperatur T des Metalls 1 beeinflussbar. Beispielsweise kann eine bestimmte Menge eines Kühlmediums (typischerweise Wasser) auf das Metall 1 aufgebracht werden.

Das Metall 1 ist im vorliegenden Fall Stahl im festen Aggregatszustand. Es könnte aber auch einen flüssigen Aggregatszustand aufweisen. Auch könnte das Metall 1 ein anderes Metall als Stahl sein, z. B. Aluminium oder ein Buntmetall. Gemäß FIG 1 ist das Metall 1 ferner als Metallband mit einer Banddickenrichtung ausgebildet. Es sind aber auch Formen des Metalls 1, z. B. stabförmige Profile (z. B. Drähte), Rohre oder U-Profile denkbar.

Die Anlage wird von einem Steuerrechner 3 gesteuert. Insbesondere wird auch das Stellglied 2 vom Steuerrechner 3 gemäß einer Stellgröße S angesteuert. Der Steuerrechner 3 ist mit einem Computerprogramm 4 programmiert. Aufgrund der Programmierung mit dem Computerprogramm 4 führt der Steuerrechner 3 - zusätzlich zur Steuerung der Anlage - ein nachfolgend näher beschriebenes Modellierverfahren für das Metall 1 aus.

Im Rahmen der Ausführung des Modellierverfahrens werden gemäß FIG 2 einem Materialmodell 5 für das Metall 1 eine Anfangstemperatur $T_A$ des Metalls 1 sowie Anfangsanteile $P1_A$, $p2_A$, in denen das Metall 1 in einer ersten bzw. einer zweiten Phase vorliegt, vorgegeben. Die Anfangstemperatur $T_A$ kann ein Schätzwert oder ein theoretisch errechneter Wert sein. Vorzugsweise aber - siehe FIG 1 - weist die Anlage ein Messglied 6 auf. Mittels des Messglieds 6 ist eine Isttemperatur T des Metalls 1 erfassbar. Im vorliegenden Fall erfolgt vor dem Beeinflussen des Metalls 1 durch das Stellglied 2 eine derartige Erfassung der Isttemperatur T. Die zu diesem Zeitpunkt erfasste Isttemperatur T ist die Anfangstemperatur $T_A$, die dem Materialmodell 5 zugeführt wird.

Die Anfangsanteile $p1_A$, $p2_A$, sind in aller Regel anhand von Berechnungen ermittelte bzw. aufgrund von Prozessbedingungen bekannt Werte. Z. B. ist vorbekannt, dass vor dem Gießen das Metall 1 vollständig in einer flüssigen Phase vorliegt. Oder es ist bekannt, dass das Material Austenit ist, wenn Stahl lange genug auf einer Temperatur oberhalb der Umwandlungstemperatur von Stahl gehalten wird.

Innerhalb des Materialmodells 5 werden gemäß FIG 2 unter Berücksichtigung dieser Anfangswerte $T_A$, $p1_A$, $p2_A$, der Stellgröße S sowie der Wirksamkeit des Stellgliedes 2 für das Innere des Metalls 1 in Echtzeit die Materialgleichungen gelöst. Die Materialgleichungen umfassen eine Wärmeleitungsgleichung der Form

$$\frac{\partial H}{\partial t} - \text{div}\left[ \frac{\lambda(H, p1, p2)}{\rho} \cdot \text{grad} T(H, p1, p2) \right] = q'$$

sowie eine Umwandlungsgleichung. In den Gleichungen bedeuten H die Enthalpie, t die Zeit, $\lambda$ die Wärmeleitfähigkeit, p1 und p2 die Anteile der Phasen, $\rho$ die Dichte und T die Temperatur des Metalls 1. q' ist eine Wärmemenge, die innerhalb des Metalls 1 durch äußere Einflüsse, z. B. eine Verformung beim Walzen oder induktives Heizen, erzeugt wird. Die aufgrund von Phasenumwandlungen entstehende Umwandlungswärme ist hingegen bereits im linken Teil der Gleichung berücksichtigt. Innerhalb des Materialmodells 5 werden somit in Echtzeit eine erwartete Temperatur $T_E$ des Metalls 1 sowie erwartete Anteile $p1_E$, $p2_E$, in denen das Metall 1 in der ersten bzw. der zweiten Phase vorliegt, ermittelt.

Die Lösung der Wärmeleitungsgleichung und auch die Berücksichtigung der Stellgröße S und der Wirksamkeit des Stellglieds 2 ist Fachleuten allgemein bekannt. Hierauf wird nachstehend daher nicht näher eingegangen. Es sei nur noch erwähnt, dass die obenstehende Wärmeleitungsgleichung die allgemeine, unabhängig vom Aggregatszustand und der Form des Metalls 1 zu lösende Gleichung ist. Im vorliegenden Fall, in dem das Metall 1 als Metallband mit einer Banddickenrichtung vorliegt, kann die Wärmeleitungsgleichung gemäß FIG 3 eindimensional formuliert werden, da die Gradienten in Bandbewegungsrichtung sowie in Bandbreite im wesentlichen Null sind. In diesem Fall kann die Wärmeleitungsgleichung also zu

$$\frac{\partial H}{\partial t} - \frac{\partial}{\partial x}\left[ \frac{\lambda(H, p1, p2)}{\rho} \cdot \frac{\partial T(H, p1, p2)}{\partial x} \right] = q'$$

vereinfacht werden, wobei x zusätzlich der Ort in Banddickenrichtung ist.

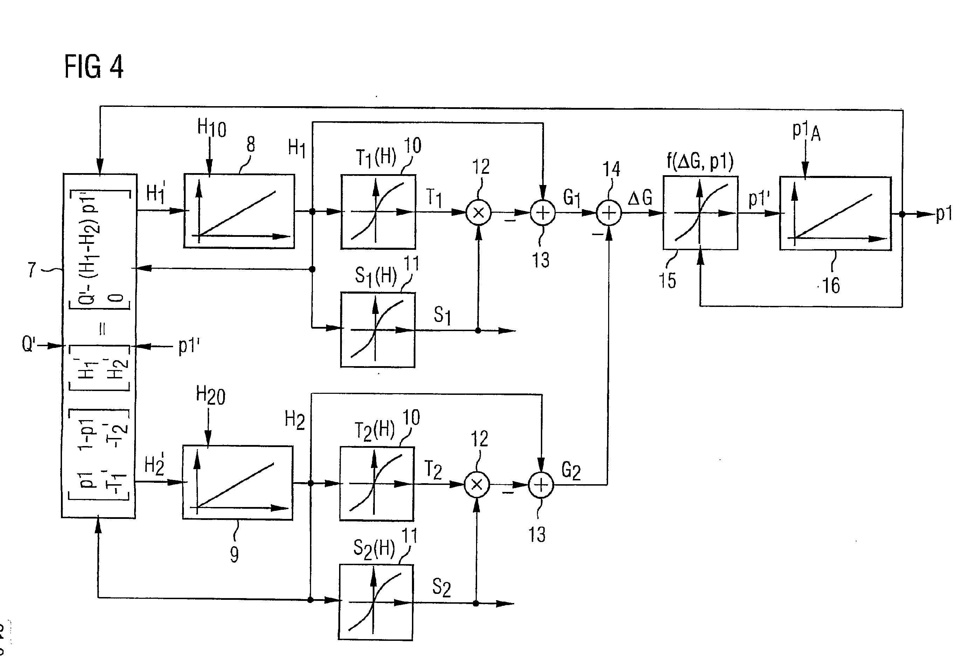

Zum Lösen der Umwandlungsgleichung wird ein Verfahren angewendet, das nachstehend in Verbindung mit FIG 4 näher erläutert wird. Bei der Darstellung gemäß FIG 4 wurde dabei die vereinfachende Annahme getroffen, dass das Metall 1 zwei Phasen annehmen kann. Das Verfahren ist aber ohne weiteres auf ein Metall 1 mit mehr als zwei Phasen erweiterbar.

Gemäß FIG 4 werden einem Gleichungslösungsblock 7 mehrere Eingangsgrößen zugeführt. Zunächst wird dem Gleichungslösungsblock 7 eine Wärmemenge Q' zugeführt. Die Wärmemenge Q' umfasst zum einen die Änderung der Wärmebilanz aufgrund von Wärmeleitung, zum anderen gegebenenfalls auch die innerhalb des Metalls 1 durch äußere Einflüsse erzeugte Wärmemenge q'.

Sodann wird dem Gleichungslösungsblock 7 noch der Anteil p1 zugeführt, in dem das Metall 1 in der ersten Phase vorliegt. Auch wird dem Gleichungslösungsblock 7 die zeitliche Änderung p1' zugeführt. Aufgrund des Umstandes, dass gemäß FIG 4 nur ein Zweiphasensystem betrachtet wird, ist somit auch der Anteil p2 der zweiten Phase und dessen Änderung p2' bekannt.

Schließlich werden dem Gleichungslösungsblock 7 noch die Enthalpien H1, H2 der Phasen des Metalls 1 zugeführt. Die Enthalpien H1, H2 sind dabei auf eine einheitliche Menge des Metalls 1 bezogen, z. B. ein Kilogramm oder ein Mol.

Der Gleichungslösungsblock 7 ermittelt anhand des linearen Gleichungssystems

$$\begin{bmatrix} p1 & 1-p1 \\ -T_1' & T_2' \end{bmatrix} \begin{bmatrix} H_1' \\ H_2' \end{bmatrix} = \begin{bmatrix} Q' - (H_1 - H_2)p1' \\ 0 \end{bmatrix}$$

die zeitlichen Änderungen H1', H2' der Enthalpien H1 und H2. Diese Änderungen H1', H2' werden Integratoren 8, 9 zugeführt, die dann als Ausgangssignal die Enthalpien H1, H2 ermitteln.

Die Integratoren 8, 9 sind mit Anfangswerten $H1_0$, $H2_0$ geeignet initialisiert. Die Anfangswerte $H1_0$, $H2_0$ sind dabei nicht unabhängig voneinander vorgebbar. Vielmehr müssen sie so bestimmt werden, dass die sich ergebenden spezifischen Gibbsschen freien Enthalpien G1, G2 bei der Phasenumwandlungstemperatur den gleichen Wert annehmen.

In dem linearen Gleichungssystem sind mit T1' und T2' die ersten Ableitungen der jeweiligen Temperaturen T1, T2 nach der jeweiligen Enthalpie H1 bzw. H2, also nicht die zeitlichen Ableitungen, zu verstehen.

Anstelle des obigen linearen Gleichungssystems kann auch ein nicht lineares Gleichungssystem der Form

$$\begin{bmatrix} p1 H_1 + (1-p1)H_2 \\ -T_1(H_1) + T_2(H_2) \end{bmatrix} = \begin{bmatrix} Q - H_0 \\ 0 \end{bmatrix}$$

gelöst werden. $H_0$ ist dabei ein geeigneter Startwert für die Enthalpie H des Systems. Dieses Gleichungssystem liefert direkt die Enthalpien H1, H2. Dafür ist es, wie bereits erwähnt, nicht linear.

Die ermittelte Enthalpie H1 wird einem Temperaturermittler 10 zugeführt. Dieser ermittelt anhand der Enthalpie H1 für die betrachtete Phase die erwartete Temperatur T1. Ferner wird die Enthalpie H1 einem Entropieermittler 11 zugeführt. Dieser ermittelt für die betrachtete Phase anhand der Beziehung

$$S_1(H1) = \int_{H10}^{H1} \frac{1}{T_1(H)} dH$$

die Entropie S1.

Die erwartete Temperatur T1 und die ermittelte Entropie S1 werden einem Multiplizierer 12 zugeführt. Dessen Ausgangssignal wird - mit negativem Vorzeichen - einem Addierer 13 zugeführt, dem weiterhin auch die Enthalpie H1 zugeführt wird. Das Ausgangssignal des Addierers 13 entspricht der spezifischen Gibbsschen freien Enthalpie G1 der betrachteten Phase.

In analoger Weise wird auch für die zweite Phase die korrespondierende spezifischen Gibbssche freie Enthalpie G2 ermittelt. In einem Addierer 14 wird dann die Differenz $\Delta$G der beiden spezifischen Gibbsschen freien Enthalpien G1, G2 gebildet.

Die so ermittelte Differenz $\Delta$G der spezifischen Gibbsschen freien Enthalpien G1, G2 wird einem Umwandlungsratenermittler 15 zugeführt. Dieser ermittelt anhand der Differenz $\Delta$G und dem Anteil p1 die Umwandlungsrate. Die Umwandlungsrate wird einem Integrator 16 zugeführt, dem zusätzlich als Anfangswert der Anfangsanteil $p1_A$ zugeführt wird. Das Ausgangssignal des Integrators 16, also der ermittelte erwartete Anteil $p1_E$, wird dann wieder dem Gleichungslösungsblock 7 und dem Umwandlungsratenermittler 15 zugeführt.

Wie aus FIG 4 ersichtlich ist, wird die Umwandlungsgleichung schrittweise gelöst, wobei bei jedem Schritt die zuvor ermittelten erwarteten Werte dem Gleichungslösungsblock 7 zugeführt werden. In ähnlicher Weise wird auch die Wärmeleitungsgleichung schrittweise gelöst. Die Ergebnisse der Wärmeleitungsgleichung und Umwandlungsgleichung werden dabei selbstverständlich nach jedem Schritt abgeglichen. Das Verfahren wird vorzugsweise für jeden Stützpunkt der Wärmeleitungsgleichung angewendet. Um Rechenzeit zu sparen, kann aber auch der Aufwand bei der Berechung des Umwandlungsmodells durch Zusammenfassen von Stützpunkten bei der Phasenumwandlung reduziert werden. Die Wärmeleitungsgleichung wird aber stets - also auch in diesem Fall - für jede Stützstelle gelöst.

Ferner weisen die Temperaturen T1, T2 bei korrekter Berechnung zu jedem Zeitpunkt denselben Wert auf, nachfolgend auch als erwartete Temperatur $T_E$ bezeichnet. Eine etwaige Abweichung der Temperaturen T1, T2 voneinander ist daher ein Indiz für eine unteroptimale Gestaltung des Materialmodells 5. Sie kann daher im Rahmen der programmtechnischen Erstellung des Materialmodells 5 für eine Optimierung des Materialmodells 5- insbesondere der Entropie- und Temperaturermittler 10, 11 - herangezogen werden.

Mittels des Verfahrens gemäß FIG 4 werden also die zeitlichen Verläufe für die erwartete Temperatur $T_E$ und die erwarteten Anteile $p1_E$, $p2_E$ ermittelt.

Die Stellgröße S muss bei dem Verfahren gemäß FIG 4 nicht zu jedem Zeitpunkt den selben Wert aufweisen. Vielmehr kann die Stellgröße S einen zeitlichen Verlauf, nachstehend Stellgrößenverlauf genannt, aufweisen. Auch der aktuelle Wert der Stellgröße S wird daher bei jedem Schritt aktualisiert. Er geht bei einer nur oberflächenwirksamen Behandlung des Metalls 1, z. B. einem Beaufschlagen mit Wasser, in die Randbedingungen ein, die beim Lösen der Wärmeleitungsgleichung zu beachten sind. Bei einer volumenwirksamen Behandlung des Metalls 1, z. B. einem Walzvorgang oder einem induktiven Beheizen, geht die Stellgröße S hingegen insbesondere in die Wärmemenge Q' ein.

Bei der schrittweisen Lösung der Wärmeleitungs- und der Materialgleichung sind zwei alternative Vorgehensweisen möglich. Zum einen kann die Ansteuerung des Stellgliedes 2 gemäß dem vorgegebenen Stellgrößenverlauf S nach dem Ermitteln der zeitlichen Verläufe für die erwartete Temperatur $T_E$ und die erwarteten Anteile $p1_E$, $p2_E$ erfolgen. Zum anderen ist aber auch möglich, nur die Stellgröße S für den jeweiligen Schritt heranzuziehen und das Stellglied 2 zwischen dem vorherigen und dem nachfolgenden Schritt gemäß der Stellgröße S anzusteuern.

In beiden Fällen ist es möglich, dem Materialmodell 5 lediglich die Stellgröße S vorzugeben. Gemäß den FIG 2 und 3 kann dem Materialmodell 5 aber auch eine Solltemperatur T* - vorzugsweise sogar ein zeitlicher Verlauf der Solltemperatur T* - vorgegeben werden. In diesem Fall ist es möglich, dass das Materialmodell 5 die Stellgröße S anhand der Solltemperatur T*, der Anfangstemperatur $T_A$ und der Wirksamkeit des Stellglieds 2 selbsttätig ermittelt.

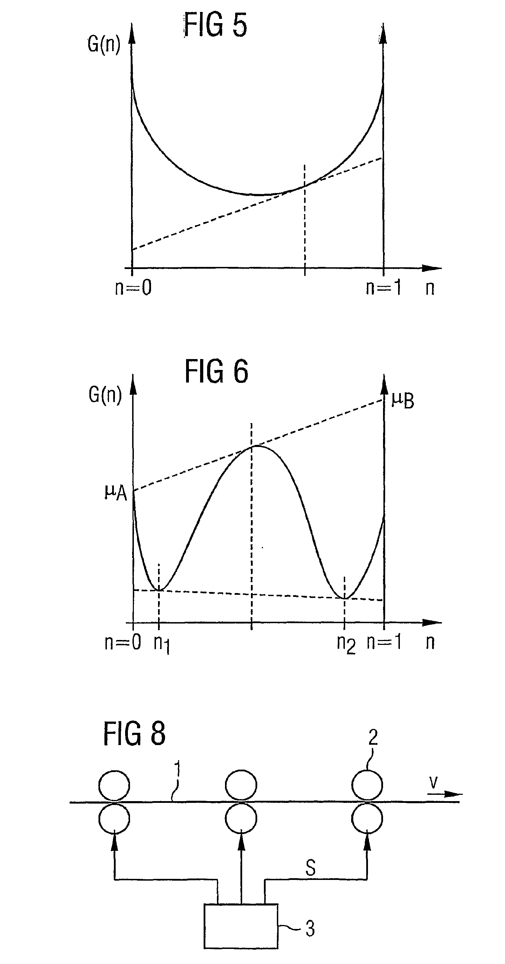

Nach dem Beeinflussen des Metalls 1 durch das Stellglied 2 wird - gemäß FIG 1 mittels eines weiteren Messgliedes 6' - erneut die Isttemperatur T des Metalls 1 erfasst. Diese Temperatur T, nachfolgend als Endtemperatur bezeichnet, wird gemäß FIG 5 von einem Adaptionsglied 5' mit der erwarteten Temperatur $T_E$ verglichen. Anhand des Vergleichs adaptiert das Adaptionsglied 5' dann das Materialmodell 5. Beispielsweise können Wärmeübergangsgrößen der Wärmeleitungsgleichung oder Einflussgrößen für die Umwandlungsraten variiert werden.

Gemäß dem gegebenen Ausführungsbeispiel werden also die spezifischen Gibbsschen freien Enthalpien G1, G2 der Phasen, die auf eine einheitliche Menge des Metalls 1 bezogen sind, ermittelt. Die Umwandlungsrate wird dann anhand der Differenz $\Delta G$ ermittelt. Im einfachsten Fall ergibt sich die Umwandlungsrate als Produkt einer Konstanten mit der ermittelten Differenz $\Delta G$. Vorteilhaft wird hier aber ein Umwandlungsratenermittler 15 angesetzt, der die Umwandlungsrate p1' aus der Differenz $\Delta G$ und dem momentanen Phasenanteil p1 ermittelt. Ein solcher Umwandlungsratenermittler 15 kann z. B. anhand eines Datensatzes von ZTU-Schaubildern für verschiedene Stähle parametriert werden.

Völlig gleichwertig wäre es weiterhin, die Umwandlungsrate anhand der Summe der mit den Anteilen p1, p2 der Phasen gewichteten spezifischen Gibbsschen freien Enthalpien G1, G2 zu ermitteln. Hier wird ausgenutzt, dass die Umwandlung bei festgehaltener Temperatur von selbst nur in Richtung einer Verminderung der Gibbsschen freien Enthalpie G abläuft.

Die obenstehend in Verbindung mit FIG 4 beschriebene Vorgehensweise ist insbesondere dann sinnvoll, wenn eine reine Phasenumwandlung ein- und derselben chemischen Zusammensetzung erfolgt, beispielsweise eine reine Umwandlung von Austenit in Ferrit. Sie ist auch anwendbar, wenn eine reine Umwandlung von einer festen in eine flüssige Phase oder umgekehrt erfolgt.

Bei der obenstehenden Beschreibung der Ermittlung der Anteile p1, p2 wurden stets die aktuellen Momentanwerte für die spezifischen Gibbsschen freien Enthalpien G1, G2, für die spezifischen Entropien S1, S2, für die spezifischen Enthalpien H1, H2 und die erwarteten Temperaturen T1, T2 verwendet. Die Auswertung der Temperatur- und Entropieermittler 10, 11 setzt aber voraus, dass die funktionalen Verläufe bzw. Abhängigkeiten der Temperaturen T1, T2 und der spezifischen Entropien S1, S2 von den korrespondierenden spezifischen Enthalpien H1, H2 bekannt sind. Um daher die Phasenumwandlungen gut und richtig beschreiben zu können, ist es erforderlich, dem Temperaturermittler 10 und dem Entropieermittler 11 zugrundeliegende Funktionen zur Verfügung zu stellen, die von dem tatsächlich modellierten Metall 1, insbesondere von dessen chemischer Zusammensetzung, abhängen. Dazu werden bei der Entwicklung des Materialmodells 5 vorzugsweise zunächst die spezifischen Gibbsschen freien Enthalpien G1, G2 für die Phasen des betrachteten Stoffes als Funktion der Temperatur ermittelt. Die Ermittlung der spezifischen Gibbsschen freien Enthalpie als Funktion der Temperatur ist beispielsweise in dem Fachaufsatz "A Thermodynamic Evaluation of the Fe-C System" von Per Gustafson im Scandinavian Journal of Metallurgy 14 (1985), Seiten 259 bis 267 beschrieben.

Anhand der so ermittelten spezifischen Gibbsschen freien Enthalpie G1 bzw. G2 als Funktion der korrespondierenden Temperatur T1 bzw. T2 - also der funktionalen Verläufe der spezifischen Gibbsschen freien Enthalpien G1, G2 - sind dann ohne weiteres die funktionalen Verläufe der Temperaturen T1, T2 bzw. der spezifischen Entropien S1, S2 als Funktionen der spezifischen Enthalpie H1, H2 ermittelbar. Diese Ermittlung ist Fachleuten allgemein bekannt. Bezüglich Details wird erneut auf den oben stehend erwähnten Aufsatz von Per Gustafson verwiesen.

Bei der Ermittlung der funktionalen Verläufe der spezifischen Gibbsschen freien Enthalpien G1, G2 und auch der funktionalen Verläufe der Temperaturen T1, T2 und der spezifischen Entropien S1, S2 müssen insbesondere auch die Änderungen der spezifischen Gibbsschen freien Enthalpien G1, G2 berücksichtigt werden, die durch Zusatzstoffe hervorgerufen werden. Es werden also für die zu betrachtenden Zusatzstoffe die Änderungen der spezifischen Gibbsschen freien Enthalpien G1, G2 als Funktion von den zugesetzten Mengen der betrachteten Zusatzstoffe ermittelt. Diese Änderungen können bezüglich der Menge des betrachteten Zusatzstoffes zwar stark nicht linear sein. Sie können auch voneinander abhängig sein. Sowohl die Wirkung als auch die gegenseitigen Abhängigkeiten sind aber bekannt, siehe die bereits erwähnten Aufsätze von J. Miettinen sowie B. Sundman und J. Agren. Im Ergebnis sind somit der Temperaturermittler 10 und der Entropieermittler 11 auch für unbekannte Mischungen bestimmt, wenn die Anteile der Zusatzstoffe bekannt sind. Von daher ist es möglich, auch unbekannte Mischungen (insbesondere unbekannte Stahlzusammensetzungen) mit hoher Genauigkeit zu modellieren.

In der Praxis weist das Metall 1 oftmals zwei chemisch voneinander verschiedene Grundbestandteile auf. Bei Stahl sind diesen beiden Bestandteile typischerweise Eisen (als Hauptbestandteil mit deutlich über 50 Atom-%) und Kohlenstoff. In diesem Fall wird zunächst die spezifische Gibbssche freie Enthalpie G als Funktion des (relativen) Anteils n eines der beiden Bestandteile und der Temperatur ermittelt. Sodann wird wieder für die zu betrachtenden Zusatzstoffe ermittelt, wie diese Funktion sich ändert. Auch hier gilt wieder, dass die Änderungen zwar stark nicht linear sein können. Dies gilt sowohl bezüglich der Mengen der Zusatzstoffe als auch bezüglich der Wirkung derselben Mengen der Zusatzstoffe bei verschiedenen Mischungsverhältnissen von Eisen und Kohlenstoff. Es ist also durchaus möglich, dass eine bestimmte Menge an Zusatzstoffen (z. B. 1 %Silizium und 2 % Phosphor) bei einem Eisen-Kohlenstoff-Gemisch mit 1% Kohlenstoff und 99 % Eisen einen völlig anderen Einfluss auf die spezifische Gibbssche freie Enthalpie des Gemisches hat als bei einem Eisen-Kohlenstoff-Gemisch mit 4% Kohlenstoff und 96 % Eisen. Die Prozentangaben beziehen sich dabei auf Atomprozente. Auch ist durchaus möglich, dass z. B. die doppelte Menge der Zusatzstoffe einen völlig anderen Einfluss auf die spezifische Gibbssche freie Enthalpie aufweist als die einfache Menge der Zusatzstoffe. Es gilt aber weiterhin, dass die Einflüsse der Zusatzstoffe bekannt bzw. auf bekannte Weise ermittelbar sind.

Der auf diese Art ermittelte Verlauf der spezifischen Gibbsschen freien Enthalpie G des Eisen-Kohlenstoff-Gemisches kann dazu herangezogen werden, die Verteilung des Metalls 1 auf chemische Zusammensetzungen der Bestandteile zu ermitteln. Dies wird nachstehend anhand des beispielhaften Gemischs Eisen-Kohlenstoff näher erläutert.

Man nehme an, es liege ein Gemisch von Eisen und Kohlenstoff vor. $n_A$ sei dabei der Anteil an Eisen, $n_B$ der Anteil an Kohlenstoff im Gemisch. Die Summe der Anteile $n_A$, $n_B$ beträgt selbstverständlich Eins. Man nehme ferner an, $n_{A1}$ sei der Anteil an Eisen in einer ersten chemischen Zusammensetzung, $n_{A2}$ der Anteil an Eisen in einer zweiten chemischen Zusammensetzung. Die Summe dieser Anteile $n_{A1}$, $n_{A2}$ entspricht dabei selbstverständlich dem Gesamtanteil $n_A$ an Eisen. In ähnlicher Weise sind in den beiden Zusammensetzungen auch Anteile $n_{B1}$, $n_{B2}$ an Kohlenstoff enthalten. Die Summe dieser Anteile $n_{B1}$, $n_{B2}$ ergibt dabei wieder den Gesamtanteil $n_B$ an Kohlenstoff. Mit $m_1 = n_{A1} + n_{B1}$ und $m_2 = n_{A2} + n_{B2}$ werden Anteile für die jeweilige Zusammensetzung eingeführt. Damit ergibt sich die Gibbssche freie Enthalpie G des Gesamtsystems zu

$$G = m_1 \cdot G1\left(\frac{n_{B1}}{n_{A1} + n_{B1}}\right) + m_2 \cdot G2\left(\frac{n_{B2}}{n_{A2} + n_{B2}}\right)$$

Durch (vollständiges) Differenzieren dieser Gleichung nach $n_{A1}$ bzw. $n_{B1}$ und Nullsetzen der Ableitungen erhält man zwei Gleichungen und damit zwei Bedingungen für die Anteile $n_{A1}$ und $n_{B1}$ Dabei muss beachtet werden, dass in dieser Gleichung $m_1$, $m_2$ und das Argument von G2 implizit $n_{A1}$ und $n_{B1}$ als Variable enthalten.

Wenn die Gibbssche freie Enthalpie G des Eisen-Kohlenstoff-Gemisches als Funktion des Anteils n an Kohlenstoff einen konvexen Verlauf aufweist, wie er beispielhaft in FIG 5 dargestellt ist, ist eine Aufteilung in zwei chemische Zusammensetzungen, bei denen die anteilig gewichtete Summe der spezifischen Gibbsschen freien Enthalpien G1, G2 kleiner als die Gibbssche freie Enthalpie des einheitlich gemischten Systems ist, nicht möglich. In diesem Fall sind die Gleichungen linear abhängig. Es ergibt sich eine einheitliche chemische Zusammensetzung des Metalls 1.

Wenn hingegen, wie beispielhaft in FIG 6 dargestellt, die Gibbssche freie Enthalpie G als Funktion des Kohlenstoffanteils nicht ausschließlich konvex verläuft, ist eine derartige Aufteilung in zwei verschiedene chemische Zusammensetzungen, bei denen die anteilig gewichtete Summe der spezifischen Gibbsschen freien Enthalpien G1, G2 kleiner als die Gibbssche frei Enthalpie G der einheitlichen Mischung ist, möglich. In diesem Fall sind die Gleichungen linear unabhängig. Dadurch ergeben sich eindeutige Werte für die Anteile $n_{A1}$, $n_{A2}$, $n_{B1}$ und $n_{B2}$. In diesem Fall zerfällt das Metall 1 in zwei voneinander verschiedene chemische Zusammensetzungen. Die Zusammensetzungen weisen Mischungsverhältnisse $n_1$ bzw. $n_2$ auf. Die Mischungsverhältnisse $n_1$, $n_2$ sind durch die Gleichungen

$$n_1 = \frac{n_{B1}}{n_{A1} + n_{B1}}$$

bzw.

$$n_2 = \frac{n_{B2}}{n_{A2} + n_{B2}}$$

definiert.

In der Praxis müssen oftmals Mischungen dieser beiden Vorgehensweisen ergriffen werden. So ist beispielsweise in Austenit eine relativ große Menge Kohlenstoff lösbar. In Ferrit hingegen ist nur eine geringe Menge Kohlenstoff lösbar. Austenit zerfällt beim Abkühlen daher in eine Mischung von Ferrit und Perlit, wobei Perlit ein eutektisches Gemenge ist, das aus Zementit ($Fe_3C$) und Ferrit besteht und durch Abkühlung von mit Kohlenstoff gesättigtem Austenit unter die Umwandungstemperatur entstanden ist.

Die Phasenumwandlungsgeschwindigkeit wird durch ein sogenanntes Umwandlungs-Diffusionsmodell beschrieben. Dabei sind die verschiedenen Phasen durch bewegliche Phasengrenzen voneinander getrennt. Innerhalb einer jeden Phase gibt es bewegliche und unbewegliche Elemente. Die unbeweglichen Elemente sind gleichmäßig verteilt. Die beweglichen Elemente sind im allgemeinen in der Phase nicht gleichmäßig verteilt. Die Diffusion der beweglichen Elemente verläuft in jeder Phase in Richtung des negativen Gradienten des dazugehörigen chemischen Potentials. Die Diffusionsgeschwindigkeit der beweglichen Elemente ist dabei endlich. Dabei wird das chemische Potential durch Differentiation der spezifischen (das heißt auf gleiche Mengen bezogenen) Gibbsschen freien Enthalpien nach der Konzentration der beweglichen Elemente gewonnen. Die genaue Darstellung der Diffusion für eines oder mehrere bewegliche Elemente ist Fachleuten bekannt. An der freien Phasengrenzfläche ist zur Ermittlung der Geschwindigkeit, mit der sich die Phasengrenzfläche bewegt, die Differenz der spezifischen Gibbsschen freien Enthalpien unmittelbar vor und unmittelbar nach der Phasengrenzfläche zu bilden. Diese Aufgabenstellung wird von Fachleuten als freies Randwertproblem mit Diffusion oder auch als Stefan-Problem bezeichnet und ist allgemein bekannt. Eine approximative Lösung findet man z. B. in Kar, A. und Mazumder, J.: Analytic Solution of the Stefan Problem in Finite Mediums. Quart. Appl. Math., Vol. 52, 1994.

Im Rahmen der vorliegenden Erfindung kann für jede Umwandlung - sowohl für eine Phasenumwandlung als solche als auch für einen Zerfall einer chemischen Zusammensetzung in andere chemische Zusammensetzungen - eine eigene Umwandlungsrate ermittelt werden. Insgesamt ist festzustellen, dass das Umwandlungsgeschehen jederzeit in Richtung einer Verminderung der Gibbsschen freien Enthalpie G des Gesamtsystems verläuft. So kann obige Modellvorstellung auch ohne explizite Verwendung der Differenz der spezifischen Gibbsschen freien Enthalpien G1, G2 an den Phasengrenzflächen formuliert werden. Insbesondere unter Berücksichtigung des Abkühlverhaltens des Metalls 1 ist damit nicht nur eine Aussage über den Phasenzustand des Metalls 1 möglich, sondern auch eine Aussage über dessen Gefügestruktur und dessen Korngröße.

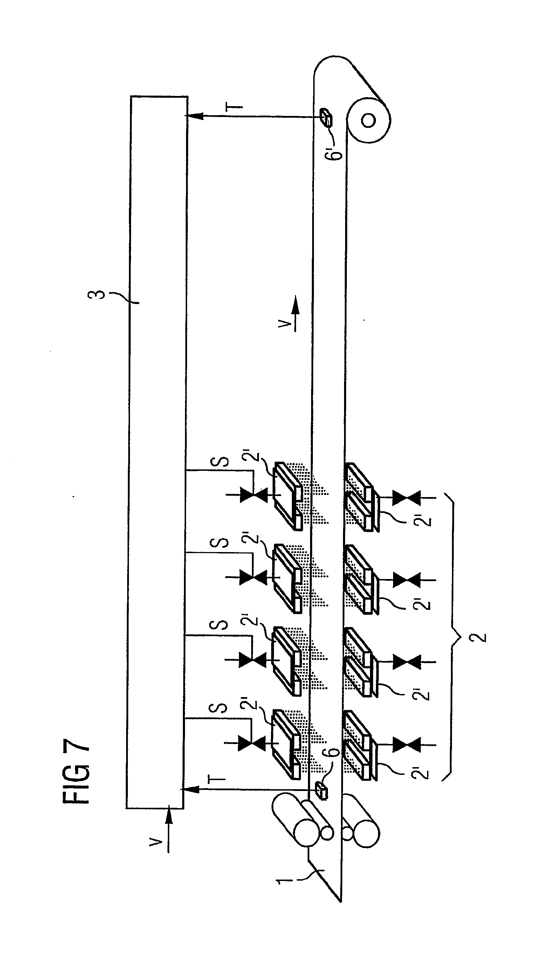

Gemäß FIG 7 ist die Anlage als Kühleinrichtung für das Metall 1 ausgebildet. Das Stellglied 2 ist als Kühlmittelstellglied 2 ausgebildet. Es ist entweder zwischen Walzgerüsten eines Walzwerks angeordnet oder den Walzgerüsten nachgeordnet. Es kann über einzeln ansteuerbare Sektionen 2' definierte Mengen eines Kühlmittels, typischerweise Wasser, auf das Metall 1 aufbringen.

Wie obenstehend in Verbindung mit FIG 1 ausgeführt, wird mittels Messgliedern 6, 6' jeweils die Temperatur T des Metalls 1 erfasst. Wenn die Kühleinrichtung ausschließlich den Walzgerüsten nachgeordnet ist, ist das Messglied 6 hinter dem letzten Walzgerüst und vor der Kühleinrichtung angeordnet. Anderenfalls sind vorzugsweise das Messglied 6 vor dem bzw. den der Kühleinrichtung vorgeordneten Walzgerüst(en) und das Messglied 6' hinter dem bzw. den der Kühleinrichtung nachgeordneten Walzgerüst(en) angeordnet.

Beim Betrieb der Kühlstrecke wird im Zeittakt mit dem Lösen der Wärmeleitungs- und der Umwandlungsgleichung jeweils auch mittels des Messglieds 6 die Anfangstemperatur $T_A$ des Metalls 1 erfasst. Ferner wird dem Materialmodell 5 eine Materialgeschwindigkeit v zugeführt. Dadurch ist das Materialmodell 5 in der Lage, bezüglich der Stellen des Metalls 1, bei denen die Anfangstemperatur $T_A$ erfasst wurde, eine Materialverfolgung durchzuführen und so die einzelnen Sektionen 2' des Stellglieds 2 zeitrichtig anzusteuern. Auch das Erfassen der Endtemperatur T mittels eines weiteren Messglieds 6' am Ende der Kühlstrecke kann zeitrichtig erfolgen und der korrespondierenden Stelle des Metalls 1 zugeordnet werden. Bei der Ausführungsform gemäß FIG 7 wird also das Modellierverfahren bei einer Vielzahl von örtlich unmittelbar aufeinanderfolgenden Stellen des Metalls 1 angewendet.

Bei dem Beispiel von FIG 7 ist die Materialflussrichtung stets dieselbe. Auch die Materialflussrichtung kann aber wechseln. So kann z. B. bei einer Grobblechstraße das Material zum Kühlen wieder zum Walzgerüst zurückgefahren werden und einem erneuten Walzvorgang mit anschließendem Kühlvorgang unterzogen werden.

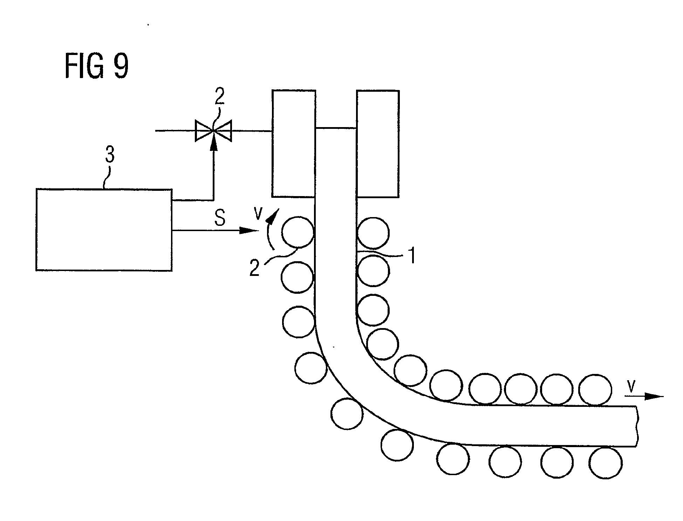

Die FIG 8 und 9 zeigen weitere Anwendungsmöglichkeiten des erfindungsgemäßen Modellierverfahrens.

Gemäß FIG 8 ist die Anlage als Walzstraße ausgebildet. Das Stellglied 2 ist im vorliegenden Fall eines der Walzgerüste, die korrespondierende Stellgröße S die Walzgeschwindigkeit. Gegebenenfalls kann das Stellglied 2 auch eine Kombination eines Walzgerüsts und einer Kühleinrichtung sein. In diesem Fall ist selbstverständlich auch die Stellgröße S eine kombinierte Stellgröße.

Bei der Ausführungsform gemäß FIG 9 ist die Anlage als Stranggießanlage ausgebildet. Das Stellglied 2 ist als kombiniertes Stellglied ausgebildet, mittels dessen einerseits die Kühlung der Kokille der Stranggießanlage beeinflusst wird und zum anderen die Abzugsgeschwindigkeit v, mit der der gegossene Strang 1 aus der Kokille ausgezogen wird.

Die Vorteile der vorliegenden Erfindung sind vielfältig. Zum einen erlaubt das Materialmodell 5 der vorliegenden Erfindung bei einer vollständigen Parametrierung bezüglich der möglichen Zusatzstoffe allgemein gültige Ergebnisse, die auch die Behandlung unbekannter Materialklassen und Werkstoffe erlauben. Ferner wird - im Gegensatz zu den Ansätzen von Scheil und Avrami - das Umwandlungsgeschehen auch für den Fall unvollständiger Umwandlung korrekt beschrieben. Dabei wird im Rahmen des Materialmodells 5 - im Gegensatz zu den Verfahren des Standes der Technik - auch die bei der Phasenumwandlung entstehende Umwandlungswärme korrekt ermittelt und berücksichtigt. Vor allem aber wird die komplizierte Topologie von Zustandsschaubildern und ZTU-Diagrammen auf die Parametrierung gewöhnlicher glatter Kurven zurückgeführt. Dadurch wird die technische Behandlung der bei Stahl außerordentlich komplexen Abhängigkeit von den Legierungselementen erst ermöglicht. Denn wenn der Druck und die Temperatur T des betrachteten Systems - hier des Metalls 1 - konstant gehalten werden, strebt die Gibbssche freie Enthalpie G des Systems gegen seinen Minimalwert. Der Vergleich der Gibbsschen freien Enthalpien G1, G2 verschiedener Phasen gibt somit die Richtung der Phasenumwandlung an. Dabei kann selbst der außerordentlich schwierige Fall eines Metalls mit Zusatzstoffen und Verbindungen wie Zementit ($Fe_3C$) als Phasen noch physikalisch korrekt behandelt werden. Schließlich sind die Ansätze nicht nur zur Temperaturberechung, sondern auch zur Berechung von Gefüge und Korngröße anwendbar.

**Patentansprüche**

1.  Modellierverfahren für ein Metall (1), dessen Temperatur (T) direkt oder indirekt durch mindestens ein Stellglied (2) beeinflussbar ist,

    - wobei einem Materialmodell (5) eine Anfangstemperatur ($T_A$) des Metalls (1) und Anfangsanteile ($p1_A$, $p2_A$), in denen das Metall (1) zumindest in einer ersten bzw. einer zweiten Phase vorliegt, vorgegeben werden,
    - wobei innerhalb des Materialmodells (5) unter Berücksichtigung der Anfangstemperatur ($T_A$), der Anfangsanteile ($p1_A$, $p2_A$) und einer Stellgröße (S) für das Stellglied (2) in Echtzeit eine Wärmeleitungsgleichung und eine Umwandlungsgleichung gelöst und so eine erwartete Temperatur ($T_E$) des Metalls (1) sowie erwartete Anteile ($p1_E$, $p2_E$), in denen das Metall (1) zumindest in der ersten bzw. der zweiten Phase vorliegt, ermittelt werden,
    - wobei das Stellglied (2) gemäß der Stellgröße (S) angesteuert wird,

    **dadurch gekennzeichnet,**
    **dass** im Rahmen der Umwandlungsgleichung die Gibbsschen freien Enthalpien (G1, G2) der Phasen des Metalls (1), anhand der Gibbsschen freien Enthalpien (G1, G2) eine Umwandlungsrate des Metalls (1) von der ersten Phase in die zweite Phase und anhand der Umwandlungsrate die erwarteten Anteile ($p1_E$, $p2_E$) ermittelt werden.

2.  Modellierverfahren nach Anspruch 1,
    **dadurch gekennzeichnet ,**
    **dass** spezifische, das heißt auf eine einheitliche Menge des Metalls (1) bezogene, Gibbssche freie Enthalpien (G1, G2) der Phasen ermittelt werden und dass die Umwandlungsrate anhand der Differenz der spezifischen Gibbsschen freien Enthalpien (G1, G2) ermittelt wird.

3. Modellierverfahren nach Anspruch 1,
   **dadurch gekennzeichnet ,**
   **dass** spezifische, das heißt auf eine einheitliche Menge des Metalls (1) bezogene, Gibbssche freie Enthalpien (G1, G2) ermittelt werden und dass die Umwandlungsrate anhand der Summe der mit den Anteilen (p1, p2) der Phasen gewichteten spezifischen Gibbsschen freien Enthalpien (G1, G2) der Phasen ermittelt wird.

4. Modellierverfahren nach Anspruch 1, 2 oder 3,
   **dadurch gekennzeichnet ,**
   **dass** spezifische, das heißt auf eine einheitliche Menge des Metalls (1) bezogene, Gibbssche freie Enthalpien (G1, G2) ermittelt werden, dass die spezifische Gibbssche freie Enthalpie (G1, G2) mindestens einer der Phasen ortsabhängig ist und
   **dass** die Umwandlungsrate anhand des Ortsintegrals über die spezifische Gibbssche freie Enthalpie (G1, G2) der Phasen ermittelt wird.

5. Modellierverfahren nach einem der obigen Ansprüche,
   **dadurch gekennzeichnet ,**
   **dass** das Metall (1) mindestens zwei chemisch voneinander verschiedene Bestandteile (z. B. Eisen und Kohlenstoff) enthält und dass die Gibbsschen freien Enthalpien (G1, G2) auch zur Ermittlung der Verteilung der Bestandteile auf chemische Zusammensetzungen herangezogen werden.

6. Modellierverfahren nach einem der obigen Ansprüche,
   **dadurch gekennzeichnet ,**
   **dass** mindestens eine der Phasen einem flüssigen Aggregatszustands des Metalls (1) entspricht.

7. Modellierverfahren nach einem der obigen Ansprüche,
   **dadurch gekennzeichnet ,**
   **dass** mindestens eine der Phasen einem festen Aggregatszustand des Metalls (1) entspricht.

8. Modellierverfahren nach einem der obigen Ansprüche,
   **dadurch gekennzeichnet ,**
   **dass** es bei einer Vielzahl von örtlich unmittelbar aufeinanderfolgenden Stellen des Metalls (1) angewendet wird.

9. Modellierverfahren nach einem der obigen Ansprüche,
   **dadurch gekennzeichnet ,**
   **dass** dem Materialmodell (5) mindestens eine Solltemperatur (T*) vorgegeben wird und dass das Materialmodell (5) die Stellgröße (S) selbsttätig ermittelt.

10. Modellierverfahren nach Anspruch 9,
    **dadurch gekennzeichnet ,**
    **dass** die Solltemperatur (T*) ein Solltemperaturverlauf (T*) ist.

11. Modellierverfahren nach einem der Ansprüche 1 bis 10,
    **dadurch gekennzeichnet ,**
    **dass** die Stellgröße (S) ein Stellgrößenverlauf (S) ist, dass unter Heranziehung des Stellgrößenverlaufs (S) die Wärmeleitungs- und die Umwandlungsgleichung schrittweise gelöst werden und so ein erwarteter Temperaturverlauf ($T_E$) des Metalls (1) sowie erwartete Anteilsverläufe ($p1_E$, $p2_E$) der Phasen ermittelt werden und dass das Ansteuern des Stellglieds (2) gemäß dem Stellgrößenverlauf (S) erst nach dem Ermitteln des erwarteten Temperaturverlaufs ($T_E$) des Metalls (1) und der erwarteten Anteilsverläufe ($p1_E$, $p2_E$) der Phasen erfolgt.

12. Modellierverfahren nach einem der Ansprüche 1 bis 10,
    **dadurch gekennzeichnet ,**
    **dass** die Wärmeleitungs- und die Umwandlungsgleichung schrittweise gelöst werden und so ein erwarteter Temperaturverlauf ($T_E$) des Metalls (1) sowie erwartete Anteilsverläufe ($p1_E$, $p2_E$) der Phasen ermittelt werden, dass die Stellgröße (S) nur für den jeweiligen Schritt herangezogen wird und dass das Ansteuern des Stellglieds (2) gemäß der Stellgröße (S) zwischen dem vorherigen und dem nachfolgenden Schritt erfolgt.

**10**

**13.** Modellierverfahren nach einem der obigen Ansprüche,
**dadurch gekennzeichnet ,**
**dass** die Anfangstemperatur ($T_A$) eine vor dem Beeinflussen des Metalls (1) durch das Stellglied (2) von einem Messglied (6) erfasste Isttemperatur (T) des Metalls (1) ist.

**14.** Modellierverfahren nach einem der obigen Ansprüche,
**dadurch gekennzeichnet ,**
**dass** nach dem Beeinflussen des Metalls (1) durch das Stellglied (2) von einem Messglied (6') eine Endtemperatur (T) des Metalls (1) erfasst wird, dass die Endtemperatur (T) mit der erwarteten Temperatur ($T_E$) verglichen wird und dass das Materialmodell (5) anhand des Vergleichs adaptiert wird.

**15.** Modellierverfahren nach einem der Ansprüche 1 bis 14,
**dadurch gekennzeichnet ,**
**dass** die für das Innere des Metalls (1) zu lösende Wärmeleitungsgleichung die Form

$$\frac{\partial H}{\partial t} - \mathrm{div}\left[\frac{\lambda(H, p1, p2)}{\rho} \cdot \mathrm{grad}\, T(H, p1, p2)\right] = q'$$

aufweist, wobei H die Enthalpie, t die Zeit, $\lambda$ die Wärmeleitfähigkeit, p1 und p2 die Anteile der Phasen, $\rho$ die Dichte und T die Temperatur des Metalls (1) sind und q' eine Wärmemenge ist, die innerhalb des Metalls (1) durch äußere Einflüsse erzeugt wird.

**16.** Modellierverfahren nach einem der Ansprüche 1 bis 14,
**dadurch gekennzeichnet , dass** das Metall (1) als Metallband mit einer Banddickenrichtung ausgebildet ist und dass die für das Innere des Metalls (1) zu lösende Wärmeleitungsgleichung die Form

$$\frac{\partial H}{\partial t} - \frac{\partial}{\partial x}\left[\frac{\lambda(H, p1, p2)}{\rho} \cdot \frac{\partial T(H, p1, p2)}{\partial x}\right] = q'$$

aufweist, wobei H die Enthalpie, t die Zeit, x der Ort in Banddickenrichtung, $\lambda$ die Wärmeleitfähigkeit, p1 und p2 die Anteile der Phasen, $\rho$ die Dichte und T die Temperatur des Metalls (1) sind und q' eine Wärmemenge ist, die innerhalb des Metalls (1) durch äußere Einflüsse erzeugt wird.

**17.** Modellierverfahren nach einem der obigen Ansprüche,
**dadurch gekennzeichnet ,**
**dass** das Metall (1) als Hauptbestandteil Eisen enthält.

**18.** Computerprogramm zur Durchführung eines Modellierverfahrens nach einem der obigen Ansprüche.

**19.** Steuerrechner programmiert mit einem Computer programm (4) nach Anspruch 18 für eine Anlage mit einem Stellglied (2), mittels dessen direkt oder indirekt die Temperatur (T) eines Metalls (1) beeinflussbar ist.

**20.** Anlage mit einem Stellglied (2), mittels dessen direkt oder indirekt die Temperatur (T) eines Metalls (1) beeinflussbar ist,
**dadurch gekennzeichnet ,**
das sie einen Steuerrechner (3) nach Anspruch 19 aufweist und daß die Anlage vom Steuerrecher gesteuert ist.

**21.** Anlage nach Anspruch 20,
**dadurch gekennzeichnet ,**
**dass** sie als Kühleinrichtung für ein Metall (1) ausgebildet ist und dass das Stellglied (2) ein Kühlmittelstellglied (2) ist.

**22.** Anlage nach Anspruch 21,
**dadurch gekennzeichnet ,**
**dass** der Kühleinrichtung mindestens ein Walzgerüst eines Walzwerks nachgeordnet ist.

**23.** Anlage nach Anspruch 21,
**dadurch gekennzeichnet ,**
**dass** die Kühleinrichtung mindestens einem Walzgerüst eines Walzwerks nachgeordnet ist.

**24.** Anlage nach Anspruch 20,
**dadurch gekennzeichnet ,**
**dass** sie als Walzstraße ausgebildet ist und dass das Stellglied (2) als Walzgeschwindigkeitsstellglied (2) ausgebildet ist.

**25.** Anlage nach Anspruch 20,
**dadurch gekennzeichnet,**
**dass** sie als Stranggießanlage ausgebildet ist.

**26.** Anlage nach Anspruch 20,
**dadurch gekennzeichnet ,**
**dass** sie als Stranggießanlage zum Gießen eines Bandes (1) mit einer Banddicke (d) zwischen 40 und 100 mm ausgebildet ist, der eine Fertigstraße unmittelbar nachgeordnet ist.

**27.** Anlage nach Anspruch 20,
**dadurch gekennzeichnet ,**
**dass** sie als Dünnbandgießanlage zum Gießen eines Metallbandes (1) mit einer Banddicke (d) von maximal 10 mm ausgebildet ist, der maximal zwei Walzgerüste nachgeordnet sind.

**Claims**

**1.** Modelling method for a metal (1), the temperature (T) of which can be influenced directly or indirectly by at least one actuator (2),

- a starting temperature ($T_A$) of the metal (1) and starting proportions ($p1_A$, $p2_A$), in which the metal (1) is at least in a first phase or a second phase, respectively, being predetermined for a material model (5),
- a heat conduction equation and a transformation equation being solved in real time within the material model (5), taking account of the starting temperature ($T_A$), the starting proportions ($p1_A$, $p2_A$) and a control variable (S) for the actuator (2), so as to determine an expected temperature ($T_E$) for the metal (1) and expected proportions ($p1_E$, $p2_E$) in which the metal (1) is at least in the first phase or the second phase, respectively,
- the actuator (2) being actuated in accordance with the control variable (S),

**characterized in that** as part of the transformation equation the Gibbs' free energies (G1, G2) of the phases of the metal (1) are determined, a transformation rate of the metal (1) from the first phase to the second phase is determined on the basis of the Gibbs' free energies (G1, G2) and the expected proportions ($p1_E$, $p2_E$) are determined on the basis of the transformation rate.

**2.** Modelling method according to Claim 1, **characterized in that** specific Gibbs' free energies (G1, G2) of the phases, i.e. Gibbs' free energies which are based on a uniform quantity of the metal (1), are determined, and **in that** the transformation rate is determined on the basis of the difference between the specific Gibbs' free energies (G1, G2).

**3.** Modelling method according to Claim 1, **characterized in that** specific Gibbs' free energies (G1, G2), i.e. Gibbs' free energies which are based on a uniform quantity of the metal (1), are determined, and **in that** the transformation rate is determined on the basis of the sum of the specific Gibbs' free energies (G1, G2) of the phases, weighted with the proportions (p1, p2) of the phases.

**4.** Modelling method according to Claim 1, 2 or 3,
**characterized in that** specific Gibbs' free energies (G1, G2), i.e. Gibbs' free energies which are based on a uniform quantity of the metal (1), are determined, **in that** the specific Gibbs' free energy (G1, G2) of at least one of the

12

phases is position-dependent, and **in that** the transformation rate is determined on the basis of the position integral over the specific Gibbs' free energy (G1, G2) of the phases.

5. Modelling method according to one of the preceding claims, **characterized in that** the metal (1) contains at least two chemically different constituents (e.g. iron and carbon), and **in that** the Gibbs' free energies (G1, G2) are also used to determine the distribution of the constituents between chemical compositions.

6. Modelling method according to one of the preceding claims, **characterized in that** at least one of the phases corresponds to a liquid state of the metal (1).

7. Modelling method according to one of the preceding claims, **characterized in that** at least one of the phases corresponds to a solid state of the metal (1).

8. Modelling method according to one of the preceding claims, **characterized in that** it is applied at a multiplicity of locations in the metal (1) which directly follow one another in terms of their position.

9. Modelling method according to one of the preceding claims, **characterized in that** at least one desired temperature (T*) is predetermined for the material model (5), and **in that** the material model (5) automatically determines the control variable (S).

10. Modelling method according to Claim 9, **characterized in that** the desired temperature (T*) is a desired temperature curve (T*).

11. Modelling method according to one of Claims 1 to 10, **characterized in that** the control variable (S) is a control variable curve (S), **in that** the heat conduction equation and the transformation equation are solved in steps using the control variable curve (S), and in this way an expected temperature curve ($T_E$) for the metal (1) and expected proportion curves ($p1_E$, $p2_E$) for the phases are determined, and **in that** the actuator (2) is only actuated in accordance with the control variable curve (S) after the expected temperature curve ($T_E$) for the metal (1) and the expected proportion curves ($p1_E$, $p2_E$) for the phases have been determined.

12. Modelling method according to one of Claims 1 to 10, **characterized in that** the heat conduction equation and the transformation equation are solved in steps, and in this way an expected temperature curve ($T_E$) for the metal (1) and expected proportion curves ($p1_E$, $p2_E$) for the phases are determined, **in that** the control variable (S) is used only for the respective step, and **in that** the actuator (2) is actuated in accordance with the control variable (S) between the preceding step and the subsequent step.

13. Modelling method according to one of the preceding claims, **characterized in that** the starting temperature ($T_A$) is an actual temperature (T) of the metal (1) recorded by a measuring element (6) before the metal (1) is influenced by the actuator (2).

14. Modelling method according to one of the preceding claims, **characterized in that** after the metal (1) has been influenced by the actuator (2), a measuring element (6') records a final temperature (T) of the metal (1), **in that** the final temperature (T) is compared with the expected temperature ($T_E$), and **in that** the material model (5) is adapted on the basis of the comparison.

15. Modelling method according to one of Claims 1 to 14, **characterized in that** the heat conduction equation which is to be solved for the interior of the metal (1) takes the form

$$\frac{\partial H}{\partial t} - \text{div}\left[ \frac{\lambda(H, p1, p2)}{\rho} \cdot \text{degrees}\, T(H, p1, p2) \right] = q'$$

where H is the enthalpy, t the time, $\lambda$ the thermal conductivity, p1 and p2 the proportions of the phases, $\rho$ the density and T the temperature of the metal (1) and q' is a heat quantity which is generated by external influences within the metal (1).

**16.** Modelling method according to one of Claims 1 to 14,
**characterized in that** the metal (1) is in the form of a metal strip with a strip thickness direction, and **in that** the heat conduction equation which is to be solved for the interior of the metal (1) takes the form

$$\frac{\partial H}{\partial t} - \frac{\partial}{\partial x}\left[\frac{\lambda(H, p1, p2)}{\rho} \cdot \frac{\partial T(H, p1, p2)}{\partial x}\right] = q'$$

where H is the enthalpy, t the time, x the location in the strip thickness direction, $\lambda$ the thermal conductivity, p1 and p2 the proportions of the phases, $\rho$ the density and T the temperature of the metal (1) and q' is a heat quantity which is generated by external influences within the metal (1).

**17.** Modelling method according to one of the preceding claims, **characterized in that** the metal (1) contains iron as its main constituent.

**18.** Computer program for carrying out a modelling method according to one of the preceding claims.

**19.** Control computer, which is programmed with a computer program (4) according to Claim 18, for an installation having an actuator (2), by means of which the temperature (T) of a metal (1) can be influenced directly or indirectly.

**20.** Installation having an actuator (2) by means of which the temperature (T) of a metal (1) can be influenced directly or indirectly, **characterized in that** it has a control computer (3) according to Claim 19 and **in that** the installation is controlled by the control computer.

**21.** Installation according to Claim 20, **characterized in that** it is designed as a cooling device for a metal (1), and **in that** the actuator (2) is a coolant actuator (2).

**22.** Installation according to Claim 21, **characterized in that** at least one rolling stand of a rolling mill is arranged downstream of the cooling device.

**23.** Installation according to Claim 21, **characterized in that** the cooling device is arranged downstream of at least one rolling stand of a rolling mill.

**24.** Installation according to Claim 20, **characterized in that** it is designed as a rolling mill train, and **in that** the actuator (2) is designed as a rolling speed actuator (2).

**25.** Installation according to Claim 20, **characterized in that** it is designed as a continuous-casting installation.

**26.** Installation according to Claim 20, **characterized in that** it is designed as a continuous-casting installation for casting a strip (1) with a strip thickness (d) of between 40 and 100 mm, with a finishing train arranged directly downstream of it.

**27.** Installation according to Claim 20, **characterized in that** it is designed as a thin-strip casting installation for casting a metal strip (1) with a strip thickness (d) of at most 10 mm and with at most two rolling stands arranged downstream of it.

**Revendications**

**1.** Procédé de modélisation pour un métal (1) dont la température (T) peut être influencée directement ou indirectement par au moins un élément (2) de réglage

    - dans lequel on prescrit à un modèle (5) de matière une température ($T_A$) initiale du métal (1) et des proportions ($p1_A$, $p2_A$) initiales en lesquelles le métal (1) se présente au moins dans une première et dans une deuxième phase,
    - dans lequel, dans le modèle (5) de matière, en tenant compte de la température ($T_A$) initiale, des proportions

($p1_A$, $p2_A$) initiales et d'une grandeur (S) de réglage de l'élément (2) de réglage, on résout en temps réel une équation de conduction de la chaleur et une équation de transformation et on détermine ainsi une température (Tg) à laquelle on doit s'attendre du métal (1), ainsi que des proportions ($p1_E$, $p2_E$) auxquelles on doit s'attendre, en lesquelles le métal (1) se présente au moins dans la première et dans la deuxième phase,
- dans lequel on commande l'élément (2) de réglage suivant la grandeur (S) de réglage,

**caractérisé**
**en ce que**, dans le cadre de l'équation de transformation, on détermine les enthalpies (G1, G2) libres de Gibbs des phases du métal (1), au moyen des enthalpies (G1, G2) libres de Gibbs un taux de transformation du métal (1) de la première phase en la deuxième phase, et au moyen du taux de transformation les proportions ($p1_E$, $p2_E$) auxquelles on doit s'attendre.

2. Procédé de modélisation suivant la revendication 1,
   **caractérisé**
   **en ce que** l'on détermine des enthalpies (G1, G2) libres de Gibbs spécifiques, c'est-à-dire rapportées à la quantité initiale du métal (1), des phases, et en ce que l'on détermine le taux de transformation au moyen de la différence entre les enthalpies (G1, G2) libres de Gibbs spécifiques.

3. Procédé de modélisation suivant la revendication 1,
   **caractérisé**
   **en ce que** l'on détermine des enthalpies (G1, G2) libres de Gibbs spécifiques, c'est-à-dire rapportées à une quantité unitaire du métal (1), et en ce que l'on détermine le taux de transformation au moyen de la somme des enthalpies (G1, G2) libres de Gibbs spécifiques des phases, pondérées par les proportions (p1, p2) des phases.

4. Procédé de modélisation suivant la revendication 1, 2 ou 3,
   **caractérisé**
   **en ce que** l'on détermine des enthalpies (G1, G2) libres de Gibbs spécifiques, c'est-à-dire rapportées à une quantité unitaire du métal (1), en ce que l'enthalpie (G1, G2) libre de Gibbs spécifique d'au moins l'une des phases varie dans l'espace, et en ce que l'on détermine le taux de transformation au moyen de l'intégrale en fonction de l'espace sur les enthalpies (G1, G2) libres de Gibbs spécifiques des phases.

5. Procédé de modélisation suivant l'une des revendications ci-dessus,
   **caractérisé**
   **en ce que** le métal (1) contient au moins deux constituants différents chimiquement l'un de l'autre (par exemple du fer et du carbone), et en ce que l'on tire parti des enthalpies (G1, G2) libres de Gibbs également pour la détermination de la répartition des constituants entre les compositions chimiques.

6. Procédé de modélisation suivant l'une des revendications ci-dessus,
   **caractérisé**
   **en ce qu'**au moins l'une des phases correspond à un état d'agrégation liquide du métal (1).

7. Procédé de modélisation suivant l'une des revendications ci-dessus,
   **caractérisé**
   **en ce qu'**au moins l'une des phases correspond à un état d'agrégation solide du métal (1).

8. Procédé de modélisation suivant l'une des revendications ci-dessus,
   **caractérisé**
   **en ce qu'**on l'utilise pour une pluralité d'emplacements du métal (1) se succédant directement dans l'espace.

9. Procédé de modélisation suivant l'une des revendications ci-dessus,
   **caractérisé**
   **en ce que** l'on prescrit au modèle (5) de matière au moins une température (T*) de consigne et en ce que le modèle (5) de matière détermine de soi-même la grandeur (S) de réglage.

10. Procédé de modélisation suivant la revendication 9,
    **caractérisé**
    **en ce que** la température (T*) de consigne est une courbe (T*) de température de consigne.

**11.** Procédé de modélisation suivant l'une des revendications 1 à 10, **caractérisé**

**en ce que** la grandeur (S) de réglage est une courbe (S) de grandeur de réglage, en ce qu'en tirant parti de la courbe (S) de la grandeur de réglage, on résout pas à pas l'équation de conduction de la chaleur et l'équation de transformation, et on détermine ainsi une courbe ($T_E$) de température à laquelle on s'attend du métal (1), ainsi que des courbes ($p1_E$, $p2_E$) de proportions auxquelles on s'attend des phases, et en ce que l'on effectue la commande de l'élément (2) de réglage suivant la courbe (S) de la grandeur de réglage seulement après la détermination de la courbe ($T_E$) de température à laquelle on s'attend du métal (1) et des courbes ($p1_E$, $p2_E$) de proportions auxquelles on s'attend des phases.

**12.** Procédé de modélisation suivant l'une des revendications 1 à 10, **caractérisé**

**en ce que** l'on résout pas à pas l'équation de conduction de la chaleur et l'équation de transformation, et on détermine ainsi une courbe ($T_E$) de température à laquelle on s'attend du métal (1), ainsi que des courbes ($p1_E$, $p2_E$) de proportions auxquelles on s'attend des phases, en ce que l'on tire parti de la grandeur (S) de réglage seulement pour le pas respectif, et en ce que l'on effectue la commande de l'élément (2) de réglage suivant la grandeur (S) de réglage entre le stade précédent et le stade suivant.

**13.** Procédé de modélisation suivant l'une des revendications ci-dessus, **caractérisé**

**en ce que** la température ($T_A$) initiale est une température (T) réelle du métal (1) relevée par un élément (6) de mesure avant que le métal (1) soit influencé par l'élément (2) de réglage.

**14.** Procédé de modélisation suivant l'une des revendications ci-dessus, **caractérisé**

**en ce qu'**après que le métal (1) a été influencé par l'élément (2) de réglage, on relève par l'élément (6') de mesure une température (T) finale du métal (1), en ce que l'on compare la température (T) finale à la température ($T_E$) à laquelle on s'attend, et en ce que l'on adapte le modèle (5) de matière au moyen de la comparaison.

**15.** Procédé de modélisation suivant l'une des revendications 1 à 14, **caractérisé**

**en ce que** l'équation de conduction de la chaleur à résoudre pour l'intérieur du métal (1) a la forme

$$\frac{\partial H}{\partial t} - \mathrm{div}\left[\frac{\lambda(H, p1, p2)}{\rho} \cdot \mathrm{grad}T(H, p1, p2)\right] = q'$$

dans laquelle H est l'enthalpie, t est le temps, $\lambda$ est la conductivité calorifique, p1 et p2 sont les proportions des phases, $\rho$ est la masse volumique et T est la température du métal (1), et q' est une quantité de chaleur qui est produite au sein du métal (1) par des influences extérieures.

**16.** Procédé de modélisation suivant l'une des revendications 1 à 14, **caractérisé**

**en ce que** le métal (1) est sous la forme d'un feuillard métallique ayant une direction d'épaisseur de feuillard, et en ce que l'équation de conduction de la chaleur à résoudre pour l'intérieur du métal (1) a la forme

$$\frac{\partial H}{\partial t} - \frac{\partial}{\partial x}\left[\frac{\lambda(H, p1, p2)}{\rho} \cdot \frac{\partial T(H, p1, p2)}{\partial x}\right] = q'$$

dans laquelle H est l'enthalpie, t est le temps, x est l'emplacement dans la direction d'épaisseur du feuillard, $\lambda$ est la conductivité calorifique, p1 et p2 sont les proportions des phases, $\rho$ est la masse volumique et T est la température du métal (1), et q' est une quantité de chaleur qui est produite au sein du métal (1) par des influences extérieures.

**17.** Procédé de modélisation suivant l'une des revendications ci-dessus, **caractérisé**
**en ce que** le métal (1) contient comme constituant principal du fer.

**18.** Programme informatique pour la mise en oeuvre d'un procédé de modélisation suivant l'une des revendications ci-dessus.

**19.** Ordinateur de commande programmé par un programme (4) informatique suivant la revendication 18 pour une installation ayant un élément (2) de réglage au moyen duquel la température (T) d'un métal (1) peut être influencée directement ou indirectement.

**20.** Installation ayant un élément (2) de réglage au moyen duquel la température (T) d'un métal (1) peut être influencée directement ou indirectement,
**caractérisée**
**en ce qu'**elle a un ordinateur (3) de commande suivant la revendication 19, et en ce que l'installation est commandée par l'ordinateur de commande.

**21.** Installation suivant la revendication 20,
**caractérisée**
**en ce qu'**elle est constituée en dispositif de refroidissement d'un métal (1), et en ce que l'élément (2) de réglage est un élément (2) de réglage du fluide de refroidissement.

**22.** Installation suivant la revendication 21,
**caractérisée**
**en ce qu'**une cage de laminoir est montée en aval du dispositif de refroidissement.

**23.** Installation suivant la revendication 21,
**caractérisée**
**en ce que** le dispositif de refroidissement est monté en aval d'au moins une cage de laminoir.

**24.** Installation suivant la revendication 20,
**caractérisée**
**en ce qu'**elle est constituée en train de laminoir, et en ce que l'élément (2) de réglage est constitué sous la forme d'un élément (2) de réglage de la vitesse de laminage.

**25.** Installation suivant la revendication 20,
**caractérisée**
**en ce qu'**elle est constituée en installation de coulée continue.

**26.** Installation suivant la revendication 20,
**caractérisée**
**en ce qu'**elle est constituée en installation de coulée continue pour couler un feuillard (1) d'une épaisseur (d) comprise entre 40 et 100 mm, en aval de laquelle est monté directement un train finisseur.

**27.** Installation suivant la revendication 20,
**caractérisée**
**en ce qu'**elle est constituée en installation de coulée de feuillard mince pour couler un feuillard (1) mince d'une épaisseur (d) de 10 mm au maximum, en aval de laquelle sont montées au maximum deux cages de laminoir.

## FIG 1

## FIG 2

$$T_A, p1_A, p2_A$$

$$S \text{ oder } T^*$$

$$\frac{\partial H}{\partial t} - \text{div}\left[\frac{\lambda(H, p1, p2)}{\rho} \cdot \text{grad } T(H, p1, p2)\right] = q'$$

$$\frac{\partial p1}{\partial t} = f_1(T, p1, p2) \; ; \quad \frac{\partial p2}{\partial t} = f_2(T, p1, p2)$$

$$T_E, p1_E, p2_E$$

$$\text{evtl. } S$$

## FIG 3

$$T_A, p1_A, p2_A$$

$$S \text{ oder } T^*$$

$$\frac{\partial H}{\partial t} - \frac{\partial}{\partial x}\left[\frac{\lambda(H, p1, p2)}{\rho} \cdot \frac{\partial T(H, p1, p2)}{\partial x}\right] = q'$$

$$\frac{\partial p1}{\partial t} = f_1(T, p1, p2) \; ; \quad \frac{\partial p2}{\partial t} = f_2(T, p1, p2)$$

$$T_E, p1_E, p2_E$$

$$\text{evtl. } S$$

FIG 4

## FIG 5

$G(n)$

$n=0$        $n=1$    $n$

## FIG 6

$G(n)$

$\mu_B$

$\mu_A$

$n=0$  $n_1$                  $n_2$  $n=1$    $n$

## FIG 8

1   2

$v$

S

3

# FIG 7

EP 1 576 429 B1

FIG 9